**Europäisches Patentamt**

**European Patent Office**

**Office européen des brevets**

(19)

(11) Veröffentlichungsnummer: **0 136 514 B1**

(12) # EUROPÄISCHE PATENTSCHRIFT

(45) Veröffentlichungstag der Patentschrift:
**18.01.89**

(51) Int. Cl.⁴: **B 23 K 1/12**

(21) Anmeldenummer: **84110015.9**

(22) Anmeldetag: **22.08.84**

(54) Verfahren zum Beloten von feinen Strukturen aus dünnen zu verlötenden Blechen, insbesondere von Abgaskatalysator-Trägerkörpern.

(30) Priorität: **05.09.83 DE 3332000**

(43) Veröffentlichungstag der Anmeldung:
**10.04.85 Patentblatt 85/15**

(45) Bekanntmachung des Hinweises auf die Patenterteilung:
**18.01.89 Patentblatt 89/3**

(84) Benannte Vertragsstaaten:
**AT BE CH DE FR GB IT LI LU NL SE**

(56) Entgegenhaltungen:
**EP-A- 0 049 489**
**DE-A- 1 627 541**
**DE-C- 622 005**

(73) Patentinhaber: **INTERATOM Gesellschaft mit beschränkter Haftung, Friedrich-Ebert-Strasse, D-5060 Bergisch-Gladbach 1 (DE)**

(72) Erfinder: **Cyron, Theodor, Dipl.-Ing., Hüttenfeld 1, D-5060 Bergisch-Gladbach 3 (DE)**

(74) Vertreter: **Mehl, Ernst, Dipl.-Ing. et al, Postfach 22 13 17, D-8000 München 22 (DE)**

## Beschreibung

Die vorliegende Erfindung betrifft ein Verfahren zum Beloten von feinen Strukturen, gemäss dem Oberbegriff des Hauptanspruchs. Werkstücke von komplizierter Form, insbesondere mit zahlreichen Lötspalten und geringer Masse an Grundwerkstoff sind schwierig und nur mit hohem Aufwand an Material und Arbeitsstunden zu verlöten. Das Hauptproblem ist dabei die richtige und gleichmässige Belotung. Das Lot ist im allgemeinen teuer und sollte daher nur in sehr geringen Mengen dosiert und möglichst dort deponiert werden, wo die zu verbindenden Teile sich berühren oder den geringsten Spalt zwischen den Verbindungsflächen aufweisen. Beim Löten von sehr dünnen Blechen mit einer Wandstärke von beispielweise 0,04 mm oder noch weniger traten bisher Schwierigkeiten auf, weil die üblichen Lotpasten in einer Bindemittelmasse Lotkörner enthalten, deren Durchmesser bis zu 0,1 mm beträgt, und die aufgetragene Schicht der Lotmasse zwangsläufig wesentlich dicker ist als der Durchmesser der Lotkörner. Im Bereich der zu verlötenden Flächen ist daher die Materialmenge des Lotwerkstoffes wesentlich grösser als die Materialmenge des angrenzenden dünnwandigen Bleches. Es kommt daher durch Diffusion zum Auflegieren der wesentlich geringeren Werkstoffmenge des Bleches mit der bedeutend grösseren Menge des Lotmaterials an der Lötstelle, wodurch die mengenmässig geringeren Anteile des Blechwerkstoffes sich in der mengenmässig grösseren Lotschmelze lösen und zum Ausschmelzen des dünnwandigen Bleche führen (Errosion). Insbesondere bei stellenweiser Anhäufung mehrerer dicker Lotkörner entstehen dann im dünnwandigen Blech Löcher, die naturgemäss die örtliche Festigkeit erheblich stören. Auch wenn man die üblichen Lotpasten sehr sorgfältig und nur in einer sehr dünnen Schicht auftragen würde, so lässt sich doch nicht vermeiden, dass an Blechkanten oder in Ecken und Spalten grössere Mengen an Lotpaste zurückbleiben, die ebenfalls das bereits erwähnte Errodieren des dünnwandigen Bleches und damit Löcher an den Lötstellen bewirken, anstatt diese Bleche miteinander zu verbinden.

In der EP-A1-0 049 489 wird ein Verfahren zum Löten von dünnen Blechen vorgeschlagen, bei dem auf den zu lötenden Flächen ein Haftklebstoff aufgebracht wird, der bei Löttemperatur rückstandsfrei verdampft, wonach die mit Haftklebstoff beschichteten Flächen mit einem trockenen Lotpulver von geringer und bestimmter Korngrösse bestäubt und anschliessend miteinander verlötet werden. Mit diesem Verfahren werden die oben genannten Probleme beim Löten von dünnwandigen Blechen gelöst, das Aufbringen von Klebstoff und Lotpulver ist aber immer noch recht aufwendig. Ferner verursachen die zwischen den zu lötenden Verbgindungsflächen deponierten Lotkörner eine für die vorhandene Lotmasse relativ grosse Distanz der Verbindungsflächen, so dass eine qualitativ gute Lötverbindung nur entstehen kann, wenn die Verbindungsflächen sich in der schmelzflüssigen Phase des Lots durch äussere oder innere Bewegungskräfte einander räumlich nähern können, was nicht in allen Fällen, so auch beispielsweise nicht bei spiralig gewickelten Abgaskatalysator-Trägerkörpern gegeben ist. Darüberhinaus ist das vor dem Löten notwendige Verdampfen des organischen Klebstoffes aus engen Spalten zeitaufwendig und führt auch bei längerem Betrieb zu Verschmutzungen des Lötofens und der für Lötöfen dieser Art notwendigen Evakuierungsvorrichtungen.

Aus der Praxis ist zumindest für bestimmte Anwendungsfälle auch bekannt, Lotpulver einfach auf zu verbindende Strukturen zu streuen, wobei beim späteren Erhitzen das Lot zu den zu verbindenden Stellen läuft. Bei der komplizierten Struktur von beispielsweise Abgaskatalysator-Trägerkörpern und den hierzu erforderlichen, oberflächennetzungsunfähigen Hochtemperaturwerkstoffen kann auf diese Weise nicht ohne weiteres genügend Lot eingebracht werden und zu den Lötstellen fliessen.

Aus der DE-A-16 27 541 ist auch ein Verfahren zum Erzielen gleichmässiger Lötspalte bekannt, nach welchem in einen zu lötenden Spalt Lotkörner mit einer bestimmten Korngrösse im Verhältnis zum Lötspalt eingestreut werden. Da jedoch nur ein überall etwa gleich breiter Lötspalt zwischen massiven Teilen behandelt wird, enthält diese Schrift keine Hinweise auf die Probleme beim Löten von dünnen, fein strukturierten Blechen mit keilförmigen oder tangentialen Lötspalten.

Auch aus der DE-PS-622 005 ist es bekannt, in einen Lötspalt zwischen massiven Bauteilen pulverförmiges Material einzubringen. Zum Ausfüllen des ganzen Hohlraumes wird auch vorgeschlagen, das Pulver zu verdichten. Auch diese Schrift gibt allerdings keinen Hinweis auf die Probleme beim Aufbringen von Lotpulver in komplizierte Strukturen, wie sie bei Abgaskatalysator-Trägerkörpern vorliegen.

Aufgabe der vorliegenden Erfindung ist ein Belotungsverfahren, bei dem auf möglichst einfache Weise Lotpulver in genügend grosser Menge in unmittelbarer Nähe der zu verbindenden Stellen einer Struktur aus dünnen Blechen deponiert wird, und zwar erst nach dem Aufwickeln bzw. Schichten des Körpers, damit die Stabilität der gewickelten Struktur des Körpers auch im Lötzustand bei schmelzflüssigem Lot durch die spaltfreie Berührung der Bleche voll erhalten bleibt. Dadurch soll die Festigkeit der Lötverbindungen erhöht und Spalte in der Struktur vermieden werden.

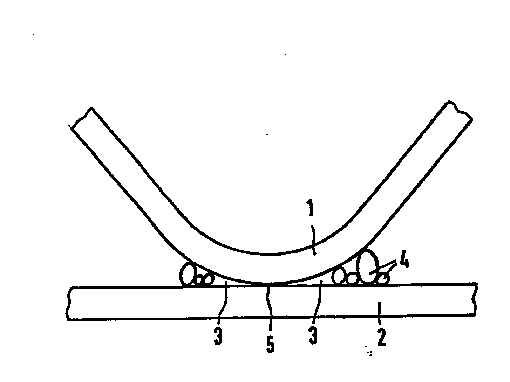

Zur Lösung dieser Aufgabe wird gemäss dem Hauptanspruch vorgeschlagen, die Belotung trocken, d.h. ohne Verwendung von Klebern, Bindemitteln oder ähnlichem, durchzuführen. Es wird dazu ein Lotpulver verwendet mit einer auf die Lötspalte abgestimmten Verteilung der Korngrössen. Die ganze Struktur wird dazu an den vorgesehenen Verbindungsstellen mit Lotpulver möglichst vollständig gefüllt. Das überschüssige Lotpulver wird anschliessend entfernt, so dass fast nur noch Lot in den Spalten in unmittelbarer Nähe der zu verbindenden Lötstellen verbleibt. Wie anhand der Zeichnung erläutert wird, weisen feine Strukturen, wie sie beispielsweise bei Abgaskatalysator-Trägerkörpern auftreten, eine typische Art von zu verbindenden Stellen auf, welche in grösser werdenden Spalten auslaufen. Mit dem vorgeschlagenen Verfahren können Lotkörner in genügender Menge in den zu lötenden Spalten deponiert werden, wo sie auch beim Entfernen von überschüssigem Lot durch Adhäsionskräfte festgehalten werden. Insbesondere bei Abgaskatalysator-Trägerkörpern, welche aus abwechselnd gewickelten gewellten und in Längsrichtung strukturierten glatten Blechbändern bestehen, kann auf diese Weise genügend Lotpulver in der Nähe der Berührungsstellen deponiert werden.

Wie sich aus den bisherigen Erklärungen ergibt, ist es besonders günstig, wenn ein Lotpulver mit einem möglichst grossen Anteil möglichst kleiner Körner verwendet wird. Je kleiner die Körner sind, desto weiter können sie in die Spalten eindringen und sich dort festsetzen. Natürlich sind für die Herstellung eines solchen Lotpulvers technische Grenzen gesetzt, jedoch wurde speziell für das beschriebene Verfahren die Herstellung von Lotpulver mit einem nennenswerten Anteil an Körnern in der Grössenordnung von 10 μ entwickelt.

In weiterer Ausgestaltung der Erfindung wird im Anspruch 2 vorgeschlagen, dass das Lotpulver in der vollständig gefüllten Struktur zusätzlich verdichtet wird. Durch diese Massnahme werden zusätzlich Körner in die Spalte gedrückt, und es wird erreicht, dass die Körner durch mechanische Kräfte so fest gehalten werden, dass sie auch beim späteren Aufheizen nicht herausfallen.

In spezieller Ausgestaltung der Erfindung wird dazu im Anspruch 3 vorgeschlagen, dass die vollständig mit Lotpulver gefüllte Struktur in mechanische Schwingung versetzt wird, insbesondere durch Rütteln, Vibrationen oder ähnliche Verfahren. Dadurch wird das Lot nicht nur verdichtet, sondern es können auch zusätzlich noch besonders kleine Körner besonders weit in die Spalten hineinwandern, so dass noch mehr Lot und vor allem noch näher an den zu verbindenden Stellen deponiert wird.

In der Praxis kann das erfindungsgemässe Belotungsverfahren so durchgeführt werden, dass ein oder mehrere der zu belotenden feinen Strukturen in einen schon teilweise mit Lot gefüllten Behälter gedrückt werden, und anschliessend der Behälter so hoch mit Lotpulver aufgefüllt wird, dass die Strukturen ganz bedeckt sind. Durch eventuelles anschliessendes Verdichten oder Rütteln können die beschriebenen Verbesserungen erreicht werden. Schliesslich werden die beloteten Strukturen wieder herausgezogen und das überflüssige Lot entfernt, beispielsweise durch Abschütteln oder auch durch Ausblasen.

Dabei kann die zu belotende Struktur gemäss Anspruch 4 vor dem Beloten an ihren offenen Seiten mit Lochmasken abgedeckt werden, damit Lot nur an vorbestimmbare Stellen gelangt. Eine solche Lochmaske kann z.B. sternförmig geschlitzt oder mit anders geformten Öffnungen versehen sein.

Zur Verdeutlichung der durch das erfindungsgemässe Belotungsverfahren erzielbaren Effekte ist in der Zeichnung eine typische Verbindungsstelle von feinen Strukturen dargestellt.

An der Berührungsstelle 5 zwischen einem gewellten Blech 1 und einem, eventuell in Längsrichtung strukturierten, glatten Band 2 entstehen auf beiden Seiten Spalte 3. Diese sich wegen der tangentialen Berührung der beiden Bleche verengenden Spalten verhindern, dass Lotkörner beim trockenen Beloten schon fertig geschichteter bzw. gewickelter Körper beliebig nahe an die zu verbindende Stelle 5 herangebracht werden können. Je kleiner jedoch die Lotkörner sind, desto näher können sie an der zu verbindenden Stelle deponiert werden. Entscheidend ist, dass genügend Lotkörner 4 soweit in den Spalt 3 hineingebracht werden können, dass beim Schmelzen der Lotkörner Lot den ganzen Spalt ausfüllt und eine feste Verbindung entstehen kann. Dazu ist es durchaus von Vorteil, wenn ausser ganz kleinen Lotkörnern auch im ausgewogenen Verhältnis, jeweils abgestimmt auf die Spaltweite, grössere Lotkörner in dem Lotpulver vorhanden sind, welche sich etwas weiter aussen in den Spalten festsetzen.

Die beschriebene Methode eignet sich besonders zum Beloten von Abgaskatalysator-Trägerkörpern, wobei als Lote alle in genügend feiner Pulverform verfügbaren Materialien in Betracht kommen.

**Patentansprüche**

1. Verfahren zum Aufbringen von Lotpulver in die näherungsweise keilförmigen oder tangentialen Lötspalten von Abgaskatalysator-Trägerkörpern, die aus dünnen, fein strukturierten Blechen (1, 2) gewickelt oder geschichtet sind, insbesondere aus glatten und gewellten Blechen (1, 2), gekennzeichnet durch folgende Merkmale:

a) Das Aufbringen von Lotpulver erfolgt trocken und nach dem Wickeln bzw. Schichten.

b) Es wird ein Lotpulver verwendet mit einer auf die Lötspalte (3) abgestimmten Verteilung oder Korngrössen mit einem möglichst grossen Anteil kleiner Körner in der Grössenordnung von 10 μ.

c) Die ganze Struktur wird mit Lotpulver möglichst vollständig ausgefüllt.

d) Das überschüssige Lotpulver wird anschliessend entfernt, so dass nur noch Lot in den Lötspalten (3) in der Nähe der zu verlötenden Stellen (5) verbleibt.

2. Verfahren nach Anspruch 1, dadurch gekennzeichnet, dass das Lotpulver in der vollständig gefüllten Struktur verdichtet wird.

3. Verfahren nach Anspruch 1 oder 2, dadurch gekennzeichnet, dass die vollständig mit Lotpulver gefüllte Struktur in mechanische Schwingungen versetzt wird, insbesondere durch Rütteln, Vibrationen etc.

4. Verfahren nach Anspruch 1, 2 oder 3, dadurch gekennzeichnet, dass die zu belotende Struktur an ihren offenen Seiten vor dem Beloten mit Lochmasken abgedeeckt wird, so dass Lot nur an durch die Löcher in den Lochmasken vorbestimm-bare Stellen in der Struktur gelangen kann.

## Claims

1. Method for the application of brazing powder into the approximately wedge-shaped or tangential brazing apertures of exhaust gas catalyst carrier bodies which are wrapped up in or coated in thin, finely structured sheets (1, 2), more particularly in level and ondulated sheets (1, 2), characterized by the following features:

a) Brazing powder is applied dry and after the wrapping or coating.

b) A brazing powder is used with a distribution of the particle sizes brought into line with the brazing aperture (3), with as large a portion as possible of small particles in the order of magnitude of 10 μ.

c) The entire structure is filled with brazing powder as completely as possible.

d) The surplus brazing powder is subsequently removed, so that brazing powder only remains in the brazing apertures (3) in the vicinity of the places (5) to be brazed.

2. Method according to claim 1, characterized in that the brazing powder is compressed in the completely filled structure.

3. Method according to claim 1 or 2, characterized in that the structure, completely filled with brazing powder, is set into mechanical rocking motions, in particular by shakes, vibrations etc.

4. Method according to claim 1, 2 or 3, characterized in that the structure to be provided with brazing powder is covered on its open sides with perforated shields, before providing it with brazing powder, so that brazing powder can only reach places, which can be predetermined, in the structure through the perforations in the perforated shields.

## Revendications

1. Procédé d'application de poudre à souder dans les fentes de soudure approximativement cunéiforme ou tangentielle de supports de catalyseurs de gaz d'échappement, qui sont constitués de tôles (1, 2) minces et finement structurées, enroulées ou empilées, notamment de tôles (1, 2) lisses et ondulées remarquables par les caractéristiques suivantes:

a) Le dépôt de poudre à souder s'effectue à sec et après l'enroulement ou l'empilage.

b) On utilise une poudre à souder ayant une répartition des granulométries adaptée aux fentes de soudure (3) et ayant une proportion aussi grande que possible de petits grains de l'ordre de grandeur de 10 μ.

c) On remplit le plus complètement possible toute la structure de poudre à souder.

d) On élimine ensuite la poudre à souder en excès, de manière qu'il ne subsiste plus de soudure que dans les fentes de soudure (3) à proximité des emplacements (5) à souder.

2. Procédé suivant la revendication 1, caractérisé en ce qu'il consiste à tasser la poudre à souder dans la structure complètement remplie.

3. Procédé suivant la revendication 1 ou 2, caractérisé en ce qu'il consiste à soumettre la structure complètement emplie de poudre à souder à des oscillations mécaniques, notamment par des secousses, des vibrations, etc.

4. Procédé suivant la revendication 1, 2 ou 3, caractérisé en ce qu'il consiste à recouvrir, avant le soudage, les côtés de la structure sur laquelle doit être appliquée la soudure, de masques perforés, de sorte que de la soudure ne puisse parvenir dans la structure qu'aux endroits qui peuvent être déterminés à l'avance par les perforations des masques à perforation.

5